Europäisches Patentamt

European Patent Office

Office européen des brevets

(11) Publication number: **0 301 380**
**A2**

# EUROPEAN PATENT APPLICATION

(21) Application number: 88111593.5

(51) Int. Cl.⁴: **G02B 6/44**

(22) Date of filing: 19.07.88

(30) Priority: 27.07.87 IT 2144887

(43) Date of publication of application:
01.02.89 Bulletin 89/05

(84) Designated Contracting States:
CH DE ES FR GB GR LI LU NL SE

(71) Applicant: SOCIETA' CAVI PIRELLI S.p.A.
Piazzale Cadorna 5
I-20123 Milano(IT)

(72) Inventor: Gazzana Priaroggia, Paolo
Piazza S. Ambrogio, 8
Milan(IT)

(74) Representative: Mariani, Giorgio, Dr. et al
INDUSTRIE PIRELLI S.p.A. Direzione Brevetti
Piazzale Cadorna, 5
I-20123 Milano(IT)

(54) Submarine telecommunication line comprising optical fibres.

(57) A submarine telecommunication line comprising optical fibers in accordance with the invention comprises opto-electronic repeaters (6,7,8,9), of the type provided with a metal envelope (10) able to withstand the mechanical stresses applied onto it, to which are connected a section of an optical fiber cable (1,5), of the type in which the mechanically resistant armour surrounds the optical fibers and a section of an optical fiber cable (2,3,4), of the type in which the mechanically resistant armour is constituted only by a rope (12) which occupies the radially innermost portion of the cable and is surrounded by the optical fibers of the latter.

Fig. 2

# SUBMARINE TELECOMMUNICATION LINE COMPRISING OPTICAL FIBERS

The present invention relates to a submarine telecommunication line comprising optical fibers, which is formed by sections of submarine cables of the optical fiber type arranged in series to one another, between which opto-electronic repeaters of the transmitted signals are interposed.

As known, in any submarine telecommunication line comprising optical fibers, the presence of a structure mechanically resistant to the tension stresses exerted on the line during its laying or during its recovery for possible repairs, is essential.

The components of this mechanically resistant structure of a submarine line are constituted by the tension resistant armours of the cables and of the opto-electronic repeaters.

As regards their tension resistant armour, the optical fiber submarine cables can be divided into two groups.

A first group of optical fiber submarine cables comprises those cables in which an armour, mechanically resistant both to the tension stresses imparted to it during laying and to the stresses due to the hydrostatic pressure on the cables already laid, is arranged around the cable portion occupied by the optical fibers.

A second group of optical fiber submarine cables comprises those cables in which the mechanically resistant armour is surrounded by the optical fibers. In particular, in cables of this kind, the armour is composed only by a rope which occupies the radially innermost portion of the cable; moreover, they are provided only with a tight sheath, substantially devoid of any mechanical resistance to the stresses due to the hydrostatic pressure, since the resistance to the latter is obtained by filling with an incompressible fluid any space, free from material, existing inside the tight sheath.

Also the opto-electronic repeaters can be divided into two groups.

A first group comprises the opto-electronic repeaters whose structure is such as to allow the anchorage to them only of the cables in which the mechanically resistant armour surrounds their portion containing the optical fibers.

In the opto-electronic repeaters belonging to this first group, the mechanically resistant structure is constituted by the tight envelope or metal casing which is provided at the two ends with elements for fastening the armours of two cables of the first group to which the repeater is connected.

The repeaters belonging to the first group have a simple and compact structure and show a certain resistance against the damages which might be originated by impacts caused by submersed bodies, as fishing nets and the like.

In fact, the repeaters belonging to the first group are provided with tight envelopes or metal casings of relevant thickness in order to ensure a high mechanical resistance, being they sized to withstand, besides the hydrostatic pressure, also the tension stresses exerted during the laying of the line.

A second group of opto-electronic repeaters is composed by repeaters having a structure able to allow the anchorage to them only of the cables of the second group in which the mechanically resistant armour is constituted by a rope occupying their radially innermost portion and surrounded by the optical fibers.

In the opto-electronic repeaters belonging to the second group, the mechanically resistant structure is constituted by a tie-rod or the like which occupies the repeater's radially innermost portion.

The opto-electronic components of the repeater are positioned around the tie-rod and the whole is surrounded by a tight envelope, except the ends of the tie-rods which project in cantilever fashion from the latter.

In the opto-electronic repeaters belonging to the second group, each space free from material inside the envelope is filled with an incompressible fluid, so that said envelope, by itself, has a small mechanical resistance. Consequently, these repeaters are likely to be damaged in the event of impacts.

From the above it can be understood that the conventional submarine telecommunication lines comprising optical fibers are entirely formed by cables of the same kind, connected together by opto-electronic repeaters of the same group.

In particular, said conventional lines can be formed only by cables of the first kind connected together by opto-electronic repeaters belonging to the first group or only by cables of the second kind connected together by opto-electronic repeaters of the second group.

The already known submarine telecommunication lines comprising optical fibers have at the same time advantages and drawbacks which will be considered herebelow.

The already known submarine lines formed by cables of the first kind connected together by opto-electronic repeaters of the first group are extremely heavy, scarcely flexible and difficult to handle, and this involves difficulties in carrying out the laying operations.

Further, when the laying depth becomes greater, the weight of the line increases and its flexibility and handling are considerably reduced. In fact, an increased laying depth corresponds to a relevant increase in the entity of the armour which, in the cables belonging to the first type, surrounds the cable portion occupied by the optical fibers, since the tension stresses exerted on the line during its laying and the stresses due to the hydrostatic pressure applied to the cables are greater.

The same considerations can be applied to the opto-electronic repeaters belonging to the first group, since the thickness of their mechanically resistant envelope is increased in accordance with the increase of the laying depth.

An advantage of the conventional submarine lines formed by cables of the first kind is that they are sufficiently resistant to the impacts due to fishing nets and the like by virtue of a substantial armour which surrounds the part of the line occupied by the transmission components.

However, the resistance to impacts is advantageous only in the submarine cable lengths laid in proximity of shores where the risk of impacts is real, whilst said risk does not practically exist for the remaining part of the line (by far more extended), since it is laid in very deep areas where no activity is substantially foreseen; consequently, as regards the line, the drawback represented by the above indicated difficulties met in the laying operation is not eliminated.

The conventional submarine lines formed by cables of the second kind connected together by opto-electronic repeaters of the second group are instead light, flexible and easy to handle, and this facilitates the laying steps.

However, an inconvenience of these lines is that they can be easily damaged in the event of impacts against submarine bodies, as for example fishing nets and the like.

The present invention aims to provide a submarine telecommunication line comprising optical fibers which has all of the above mentioned advantages in respect of the lines already known, without however showing the relative inconveniences, this being obtained by connecting opto-electronic repeaters of the first group both to optical fiber cables of the first kind and to optical fiber cables of the second kind.

Accordingly, the object of the present invention is a submarine telecommunication line comprising optical fibers, which comprises at least one opto-electronic repeater of the transmitted signals and at least two optical fiber submarine cables between which said repeater is interposed and connected, the opto-electronic repeater being of the type provided with a tight envelope mechanically resistant to any stress imparted to it even during the laying of the line, the line being characterized in that at least one of the two submarine cables is of the type in which the mechanically resistant armour is a rope which occupies its radially innermost portion, and in that the connection between the opto-electronic repeater and the submarine cable of said type comprises a mechanically resistant tubular body which carries, integral to itself and transversally situated in its own cavity, a mechanically resistant partition, provided with through openings for the passage of the optical fibers, to which is secured the rope constituting the cable armour, said tubular body having one end provided with elements for its mechanical anchorage to the repeater envelope and the other end tightly applied to the sheath of the cable, hydraulic sealing means being housed in said mechanically resistant tubular body.

The present invention will be better understood from the following detailed description made by way of non limiting example with reference to the figures of the attached sheet of drawing, in which :

FIGURE 1 - shows diagrammatically a line according to the invention,

FIGURE 2 - shows in section the connection between one end of a cable and an opto-electronic repeater, and

FIGURE 3 - shows in plan view a particular of the connection of FIG.2.

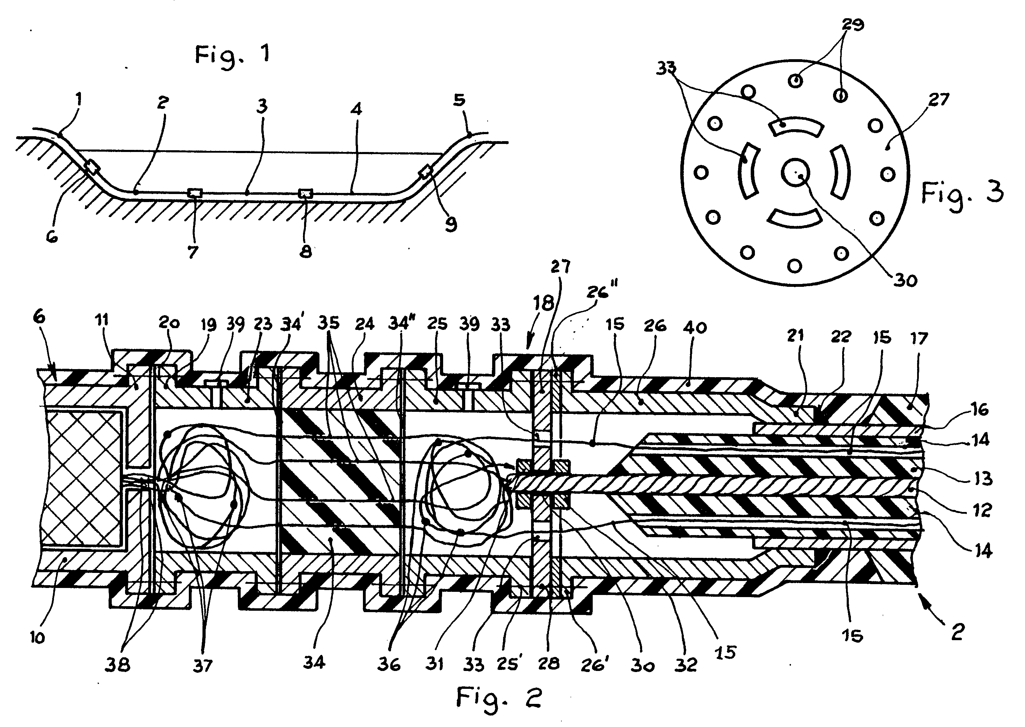

A submarine telecommunication line comprising optical fibers in accordance with the invention is represented schematically in FIG. 1; it comprises a plurality of lengths of optical fiber cables (1,2,3,4,5), in series and connected together by opto-electronic repeaters (6,7,8,9).

In particular, the lengths of optical fiber cables indicated by the reference numerals (1) and (5) are known per se, and are of a first type in which the mechanic ally resistant armour surrounds the cable portion containing the optical fibers, whilst the cable lengths indicated by reference numerals (2,3,4) are known per se and of a second type in which the mechanically resistant structure of the cable is constituted only by a rope situated in the radially innermost cable portion and therefore internal to the cable zone where the optical fibers are situated.

All the opto-electronic repeaters (6,7,8,9) of the line are known per se and belong to the first group which foresees a tight envelope mechanically resistant to any stress exerted on the line even during its laying; therefore their envelope is mechanically resistant to the tension stresses exerted during the laying operation and to the hydrostatic pressure exerted on the line already laid.

The opto-electronic repeaters (6,7,8,9) which, as said above, are known per se, are provided at both ends of their mechanically resistant envelope with elements for connecting to it the mechanically resistant armours of the cables of the first kind, in which said mechanically resistant armour surrounds the cable portion containing the optical fibers.

Consequently, the connections between cables (1) and (5), which are of the above described first kind, and the opto-electronic repeaters (6) and (9), being carried out with conventional systems and means, are not included in the scope of the present invnetion, so that they will not be illustrated in the figures and will not be described.

On the contrary, the connection between an optical fiber cable of the second kind, in which the mechanically resistant armour is constituted only by a rope situated in the radially innermost cable portion, and an opto-electronic repeater of the first group provided with a tight envelope mechanically resistant to the stresses applied to the repeater, is effected through connection means, hereinafter described, which represent an essential element for the line according to the invention.

The connection means in question comprise in general a tubular body mechanically resistant at least to the tension stresses exerted on one line during laying.

An end of the tubular body is connected to one end of the envelope of the opto-electronic repeater through anchorage elements which connect one end of said tubular body to the same connection elements provided on the envelope for fastening the external armour of the cables belonging to the first type.

The tubular body contains, fast with it and arranged in its cavity, a partition provided with through openings in its wall for the passage of the optical fibers of the cable or of the repeater.

The partition is mechanically resistant and to it is connected the end of the rope constituting the mechanically resistant armour of the optical fiber cable of the second type, which is foreseen as sole armour and is situated in the radially innermost cable portion.

The other end of the tubular body is tightly applied to the cable sheath and sealing means are housed inside the tubular body.

FIGURE 2 represents a particular embodiment, not to be considered as restrictive, of a connection - described in detail herebelow - between a particular optical fiber cable (for instance cable 2) of the second type, in which the mechanically resistant armour is composed only of a rope (12) which occupies its radially innermost portion, and an opto-electronic repeater (for instance that indicated with reference 8) of a type provided with a tight envelope (10) mechanically resistant to any stress applied even during the laying of the line.

FIGURE 2 represents schematically only a part of the end of the opto-electronic repeater (6), since it is of a type known per se; a flange (11) is present at each end of envelope (10). This flange (11) represents the element to which - in the conventional lines - is anchored the mechanically resistant armour of the cables of the first type.

The particular cable (2), not to be considered as restrictive for the purposes of the present invention, shows, around rope (12), a core (13) of plastic material embedding small tubes (14), where optical fibers (15) are loosely contained; said core (13) is surrounded by sheath (16) of cable (10), made for instance of metallic material and having only the function of hydraulic seal. Externally, the metal sheath (16) is provided with a covering (17) of plastic material.

As it can be seen in FIG. 2, the end of cable (2) has its own components bared gradually; in particular, the end of rope (12) and the ends of the optical fibers (15) are cantilevering.

A mechanically resistant tubular body (18) is interposed between the cable (2) and the opto-electronic repeater (6); one end of said body, comprising a flange (19), is connected for instance by bolts (20) to flange (11) of the mechanically resistant envelope of the opto-electronic repeater (6).

The other end (21) of the mechanically resistant tubular body (18) is tightly applied, for instance by means of a welding (22), to the metal sheath (16) of cable (2).

The tubular body (18) is formed by several tubular sections (23,24, 25, 26), each provided with end flanges, which are aligned to one another and mutually secured.

The tubular sections (23,24,25), whose features will be described hereinafter, are connected directly to one another; instead, between the tubular section (25) and the tubular section (26), a plate (27) is interposed; said plate, represented in plan view in FIG.3, constitutes a particular embodiment of the partition, provided with through openings, which is present in the cavity of the tubular body and which is integral with the latter.

The edge of plate (27) is interposed between flanges (25′) and (26′); bolts (28) passing through holes (29) (FIG. 3) of the plate and holes aligned to these, present on flanges (25′) and (26′), allow the connection between plate (27) and the tubular sections (25,26) at flanges (25′) and (26′) of the latter. Moreover, a packing (26″) of electrically insulating material is sandwiched between flange (26′) and the edge of plate (27).

Plate (27), at its own axis, is provided with a through hole (30) in which passes the end of rope (12) of cable (2) and a pair of clamps (31,32), having diametrical dimensions greater than those of hole (30), are clamped on the rope from opposite parts of plate (27), connecting rope (12) to the latter.

The unit formed by the through hole (30) for the end of rope (12) and by the pair of clamps (31, 32) is a particular embodiment, reported only by way of example and therefore not restrictive, of the means for securing to plate (27) the rope (12) constituting the mechanically resistant armour of cable (2).

Plate (27) comprises moreover through openings (33), through which - in the particular embodiment shown -pass the optical fibers (15) of cable (2) to allow the ends of said fibers to be positioned in the space comprised between plate (27) and the opto-electronic repeater (10).

As said above, hydraulic sealing means are present in the mechanically resistant tubular body. These sealing means have the task of preventing possible water traces, penetrated in the able for any reason, for instance through micro-cracks in a point of their sheath, from reaching the opto-electronic components of the repeater, damaging them.

FIGURE 2 illustrates a particular embodiment of the sealing means present inside the mechanically resistant tubular body (18).

As said above, the length of the mechanically resistant tubular body (18) comprised between plate (27) and the opto-electronic repeater (6) is formed by three tubular sections (23), (24) and (25), mutually aligned and connected.

As regards the intermediate section (24), its internal cylindrical surface is preferably knurled and tightly connected to the surface of a cylindrical body (34) of polymeric material. The latter, whose longitudinal size is substantially equal to the length of the tubular section (24), is made for instance of epoxy resin and embeds the central portions of optical fibers (35), whose ends are cantilevering from the two bases (34') and (34") of body (34).

Preferably, at least in the central zone of the lengths where the optical fibers are embedded in the plastic material of body (34), said fibrs are devoid of the usual protective coverings of plastic material.

The ends of the optical fibers (35), protruding in cantilever fashion from base (34") of body (34), are connected at (36) with the optical fibers (15) of cable (2). On the contrary, the ends of the optical fibers (35), protruding in cantilever fashion from base (34') of body (34), are connected at (37) with the optical fibers (38) outcoming from the opto-electronic repeater (6).

Therefore the tubular sections (23) and (25) have also the task of encasing the connections between the various optical fibers which ensure the joining between the optical fibers of the cable and the opto-electronic components of the repeater.

In particular, the tubular sections (23) and (25) contain, wound up in the form of skeins, parts rather long of the terminal portions of the optical fibers to be joined to facilitate said connection.

Moreover, any space free from material inside the tubular sections (23) and (25) and any space inside the tubular section (26) is completely filled with a water-repellent grease.

To fill said spaces with the water-repellent grease, provision is made of holes, obtained in the walls of the tubular sections (23) and (25), which can be closed by plugs (39).

Further, a covering (40) of polymeric material surrounds the tubular body (18) and the mechanically resistant envelope of the opto-electronic repeater (6); said covering (40) is butt-joined to covering (17), made of plastic material, of cable (2).

The above described particular embodiment of the sealing means encased in the mechanically resistant tubular body and the position of hydraulic sealing means in the portion of said tubular body comprised between plate (27) and the opto-electronic repeater (6), as well as the particular shape of said portion, are not to be considered as restrictive.

In fact, according to an alternative embodiment not represented in the figures, body (34) of polymeric material is incorporated in the portion of tubular body comprised between plate (27) and the end of cable (2); said incorporation can be of any kind, provided that the cylindrical surface of body (34) is tightly adherent to the surface of the cavity of said portion of the tubular body.

Further, according to this alternative embodiment, the portion of tubular body comprised between plate (27) and the opto-electronic repeater (6) is constituted by an individual tubular section.

As said above, the connection illustrated in FIG. 2 has been described with specific reference to the union between able (2) and the opto-electronic repeater (6). The connections of cables (2) and (3) with the opto-electronic repeater 7 (see FIG.1), the connections of cables (3) and (4) with the opto-electronic repeater (8) and the connection of cable (2) with repeater (9) are identical to that described and illustrated in FIG.2, since all cables (2), (3) and (4) are of the second type which foresees, as mechanically resistant structure, only a rope occupying the radially innermost cable portion.

On the contrary, the connections of cables (1) and (5) with the opto-electronic repeaters (6) and (9), respectively, are already known per se, since said cables (1) and (5) are of the first type which foresses a mechanically resistant armour situated externally to the cable portion containing the optical fibers.

A line in accordance with the invention comprises moreover electric conductors for supplying the opto-electronic repeaters of the transmitted signals.

In the illustrated and described particular embodiment, one of the conductors is formed by the unit comprising the armoured of both cables, the mechanically resistant tubular sections comprised between plate (27) and the opto-electronic repeater and the envelope of the opto-electronic repeaters, whilst the other conductor is the sea in which the line is laid.

In an alternative embodiment one of the conductors is formed by the unit comprising the armours of the first type cables, the envelopes of the repeaters and the sheaths of the second type cables; in this case the insulating packing (26″) is not present and electrically insulating coverings are provided for clamps (31) and (32) and for hole (30) of plate (27). Also in this alternative embodiment the other conductors is represented by the sea where the line is laid.

The two above indicated particular examples of electric conductors intended to supply the opto-electronic repeaters do not cover all the possible embodiments of the same, which fall anyhow within the scope of the invention, as a technician of this field can foresee them only on the ground of his own technical knowledge.

From the above reported description of a line according to the invention and from the following considerations it can be seen that the invention reaches the proposed aims.

The particular connection means, representing an essential element in a line according to the invention, allow the connection of cables of the second type, namely of cables whose mechanically resistant armour consists only of a rope situated in the radially innermost cable portion, with opto-electronic repeaters provided with a sealing envelope mechanically resistant also to the stresses suffered during the laying operation.

Further, the connection means representing an essential element of the invention obtain this result by their engagement with the elements present on the repeater envelope, through which it is possible to fasten thereto the mechanically resistant armours of cables of the first type, namely of cables in which the armours surround the optical fiber contained therein.

It follows that these connection means make possible the provision of a submarine line, comprising optical fibers, in which both types of optical fiber cables are present, together with opto-electronic repeaters only of the type provided with a sealing envelope mechanically resistant to mechanical stresses.

Consequently, submarine lines can be obtained, which are more protected against the damages they might suffer in the event of impacts against submersed bodies, since in the lengths where this risk exists the line can be formed by cables of the first type, which are more resistant to the impacts and which at the same time are considerably light, flexible and easy to be handled, since they comprise cables of the second type having said features, which constit ute the greater part of the line where no risks exist of damages due to impacts.

Although some embodiments of the present invention have been described and illustrated, it is understood that it includes all possible variations and modifications deriving from the above indicated inventive idea.

## Claims

1. A submarine telecommunication line comprising optical fibers, which comprises at least an opto-electronic repeater (6) of the transmitted signals and at least two optical fiber submarine cables between which said repeater is interposed and connected, the opto-electronic repeater being of the type provided with a tight envelope (10) mechanically resistant to any stress imparted to it even during the laying of the line, the line being characterized by the fact that at least one (2) of the two submarine cables is of the type in which the mechanically resistant armour is a rope (12) which occupies its radially innermost portion, and by the fact that the connect ion between the opto-electronic repeater (6) and the submarine cable (2) of said type comprises a mechanically resistant tubular body (23,24,25,26) which carries, integral to itself and transversally situated in its own cavity, a mechanically resistant partition (27), provided with through openings (33) for the passage of the optical fibers (15), to which is secured the rope (12) constituting the cable armour, said tubular body (23,24,25,26) having one end (19) provided with elements for its mechanical anchorage to the repeater envelope (10) and the other end (21) tightly applied to the sheath (16) of the cable (2), hydraulic sealing means (34) being housed in said mechanically resistant tubular body.

2. A submarine line as in CLAIM 1, characterized by the fact that the mechanically resistant tubular body (23,24,25,26) which carries, integral to itself and transversally situated in its own cavity, a mechanically resistant partition (27) provided with through openings (33), to which is secured rope (12) forming the armour of cable (2), comprises at least two tubular sections (23,24,25),(26), whose axes are aligned to each other, btween which is interposed a plate (27) provided with through openings (33) constituting the partition of the tubular body, the edges of plate (27) being mechanically fastened in a tight way to the mutually facing ends of the two tubular sections (23,24,25),(26), and plate (27) being provided at its own axis with an element (30, 31,32) for connecting to itself the rope (12) constituting the armour of cable (2).

3. A submarine line as in CLAIM 2, characterized by the fact that the element for connecting the rope (12), constituting the armour of cable (2), to plate (27), comprises a through hole (30) inside the latter, intended to encase the terminal portion of rope (12), and a pair of clamps (31,32) clamped on the rope from opposite sides with respect to plate (27).

4. A submarine line as in CLAIM 1, characterized by the fact that the hydraulic sealing means (34) housed in the mechanically resistant tubular body (23,24,25,26) comprise a cylindrical body (34) of polymeric material in which are embedded the central portions of a plurality of optical fibers (35), each optical fiber (35) having one end connected to an optical fiber (38) of the opto-electronic repeater (6) and the other end connected to an optical fiber (15) of the cable, the body (34) of polymeric material having its cylindrical surface tightly connected to the inner surface of the mechanically resistant tubular body (24).

5. A submarine line as in CLAIM 4, characterized by the fact that the cylindrical body (34) of polymeric material in which are embedded the central portions of a plurality of optical fibers (35) is situated in the portion of tubular body (23,24,25) comprised between its end provided with means for the mechanical anchorage to envelope (10) of repeater (6) and the mechanical resistant partition (27).

6. A submarine line as in CLAIM 5, characterized by the fact that the portion of tubular body (23,24, 25) comprised btween its end provided with elements for the mechanical anchorage to envelope (10) of repeater (6) and the mechanically resistant partition (27) is formed by three tubular sections (23, 24, 25) aligned and tightly connected to one another and by the fact that the cylindrical body (34) of polymeric material has its own cylindrical surface tightly connected to the cylindrical surface of the cavity of the intermediate tubular section (24), the longitudinal size of the intermediate tubular section and of said cylindrical body of polymeric material being substantially equal.

7. A submarine cable as in CLAIM 1, characterized by the fact that each space free from material inside the mechanically resistant tubular body (23,24,25,26) is filled with water-repellent grease.

EP 0 301 380 A2

Fig. 1

Fig. 3

Fig. 2